# EUROPEAN PATENT APPLICATION

(11) **EP 3 961 314 A1**
(43) Date of publication of application: **02.03.2022**
(21) Application number: 20193566.5
(22) Date of filing: 31.08.2020
(51) Int. Cl.: G05B 13/02, G05B 11/42

(54) **CONTROL LOOP OPTIMIZATION**

(71) Applicant: Siemens Aktiengesellschaft, 80333 München (DE)
(72) Inventor: Pfister, Maximilian, 91058 Erlangen (DE); Amschler, Benjamin, 95500 Heinersreuth (DE)

(57) **Abstract**

Method of optimizing a control loop (10) of a converter (1), e.g., a control system (20) of a converter (1), comprising the steps of: acquiring actual values (nᵢₛₜ) of a drive system (2) powered by the converter (1), inferring, based on at least one machine learning model (ML1, ML2, ML3) and the actual values (nᵢₛₜ), one or more adjustments of control parameters (Kp, Tn) of the control loop (10) for improving the control accuracy, outputting the adjustments for adapting the control parameter (Kp, Tn) values.

## Description

### TECHNICAL FIELD

The present disclosure relates to closed loop control for drive systems.

### BACKGROUND

Tuning a control loop is the adjustment of its control parameters (proportional band/gain, integral gain/reset, derivative gain/rate) to the optimum values for the desired control response. Stability (no unbounded oscillation) is a basic requirement, but beyond that, different systems have different behavior, different applications have different requirements, and requirements may conflict with one another.

PID controllers are widespread in industry, being the most popular ones for decades. Hence, even small improvements in PID design could have major impact worldwide. There are many theoretical and practical papers on PID tuning algorithms, in time and frequency domain. They are using analytical, graphical, or empirical methods, including artificial intelligence.

There are several methods for tuning a PID loop. The most effective methods generally involve the development of some form of process model, then choosing P, I, and D based on the dynamic model parameters. Manual tuning methods can be relatively time-consuming, particularly for systems with long loop times.

Traditional tuning techniques like modulus optimum or symmetrical optimum can be applied to the design of control loops for many power electronic applications. When directly implemented in digital control systems, this will lead to reduced stability margins since the sampling effects are not taken into account for the controller design.

In the field of electrical drives two methods are frequently employed in this parametric optimization: the AVO and SO criterions, i.e. Absolute Value Optimum (AVO) and Symmetric Optimum (SO) criterions.

The balance of these effects is achieved by loop tuning to produce the optimal control function. The tuning constants must be derived for each control application, as they depend on the response characteristics of the complete loop external to the controller. For the overall control function Kp, Kd, Ki, are all non-negative, and denote the coefficients for the proportional, integral, and derivative terms respectively (sometimes denoted P, I, and D). Therein Kp is the proportional gain, a tuning parameter, Ki is the integral gain, another tuning parameter, and Kd is the derivative gain, yet another tuning parameter.

For example, manual tuning may be performed but requires experienced personnel.

It is therefore an object of the present disclosure to improve the control accuracy of a control loop for a drive system, preferably in an automated way, and to identify which parameters need further tuning, in particular in case multiple parameters need to be tuned.

The object is achieved according to the following aspects.

According to a first aspect a method of optimizing a control loop accuracy of a converter, e.g., a control system of a converter, is proposed. The method comprising the step of acquiring actual values of a drive system powered by the converter. The method further comprising inferring, based on a machine learning model and the actual values, one or more adjustments of control parameters of the control loop for improving the control accuracy, and outputting the adjustments for adapting the control parameter values.

According to a second aspect a converter operative to perform the method steps according to the first aspect is proposed.

According to a third aspect a method of training a machine learning model is proposed. The method comprising the steps of training a machine learning model based on actual values of a (virtual) drive system, the actual values comprising actual rotation speed, rotation speed setpoint, actual torque, and control difference.

Further embodiments are subject of the dependent claims and also described in the following.

### BRIEF DECSRIPTION OF THE DRAWINGS

- Figure 1: shows a schematic illustration of a converter powering a drive system.
- Figure 2: shows a schematic illustration of different stages during the lifecycle of a drive system.
- Figure 3: shows a schematic illustration of a step response of a control loop before optimization.
- Figure 4: shows a schematic illustration of an optimization of a control loop according to a first embodiment.
- Figure 5: shows a schematic illustration of a step response of a control loop after optimization.
- Figure 6: shows oscillations of the control difference after a step response.
- Figure 7: shows a schematic illustration of an optimization of a control loop according to a second embodiment.
- Figure 8: shows a schematic illustration of an optimization of a control loop according to a third embodiment.
- Figure 9: shows a schematic illustration of data handling, as well as training and creation of a first and a second machine learning model.
- Figure 10: shows a schematic illustration of a setup for generating a data set for training and/or testing one or more machine learning models.

### DETAILED DESCRIPTION

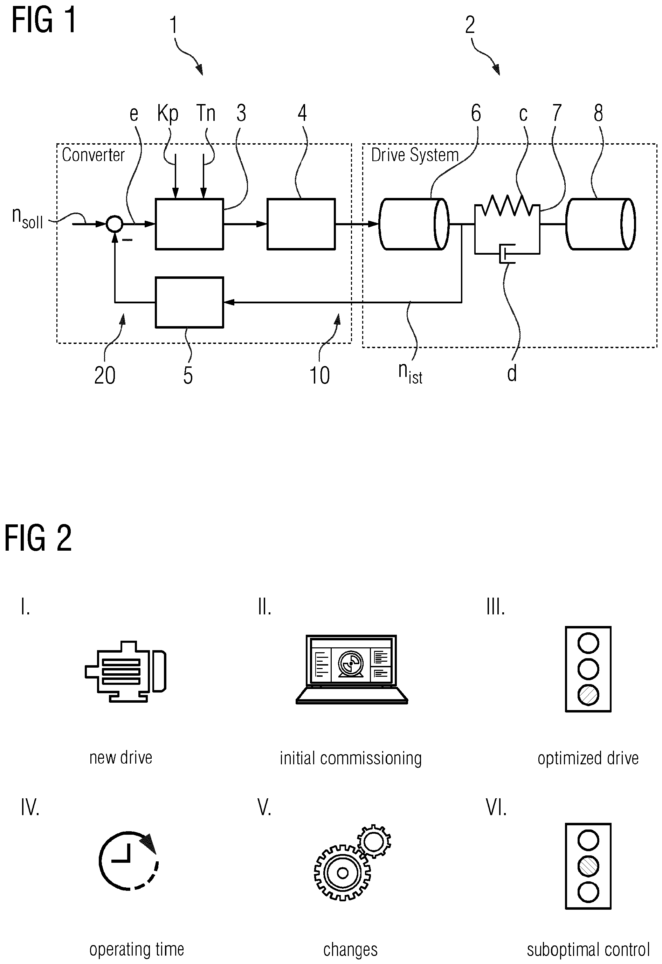

In Figure 1 a converter 1 and a drive system 2 are shown. The control of the drive system 2 is performed by the converter 1 and a control system 20 preferably integrated into the converter 1. To that end, the converter 1 is part of a control loop 10 and may comprise a processor and a memory to control the drive system 2. The converter 1 hence powers the drive 6. In general, a mechanical system which is driven by a motor can be simplified by a so called two-mass-system. The connection between these two loads, the coupling, is described by stiffness (c) and a damping (d). The drive 6 is hence coupled with a spring-damper system 7, which in turn is coupled with a load 8, which together creates a two-mass oscillator. A current control circuit is simplified as a closed-loop control element 4 in Figure 1. Therein, Kp corresponds to the damping of the motor in relation to the setpoint value, and the integral time Tn of the integrator acts like a spring. The proportional gain factor Kp is proportional to the inductance of the motor winding, whereas the integral time Tn is proportional on the current controller 4 clock cycle. Optimization may comprise optimizing the proportional gain factor optimization, Kp, and/or the integral time optimization, Tn.

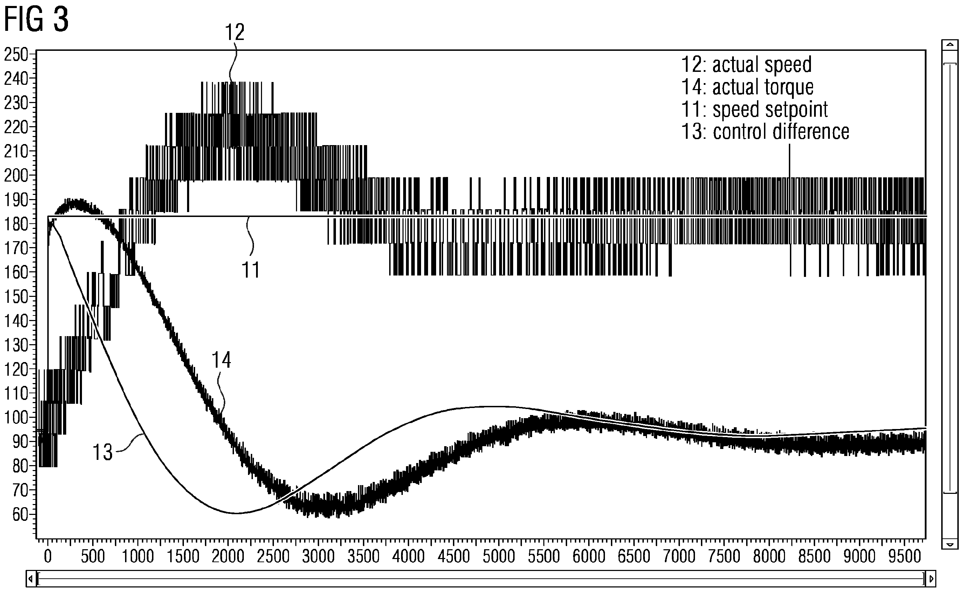

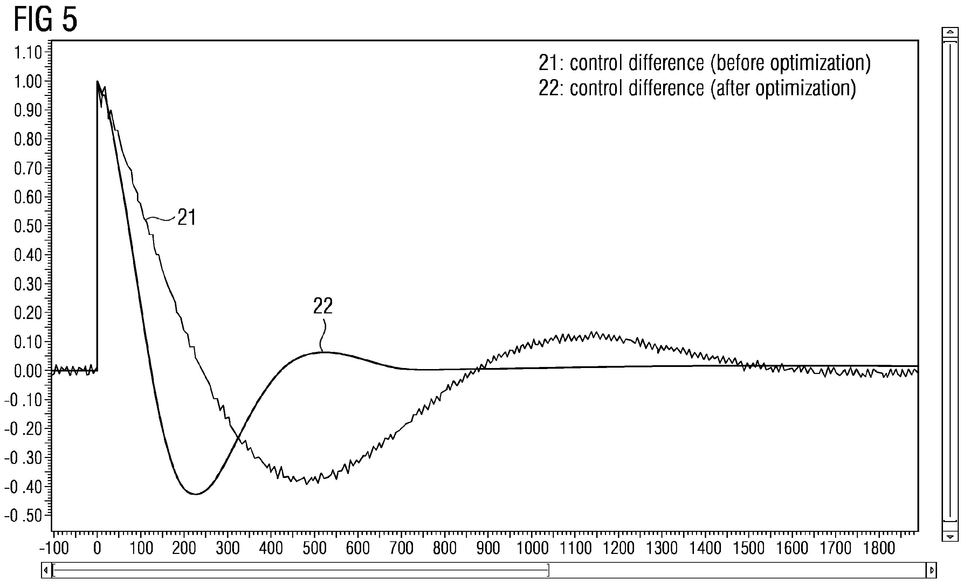

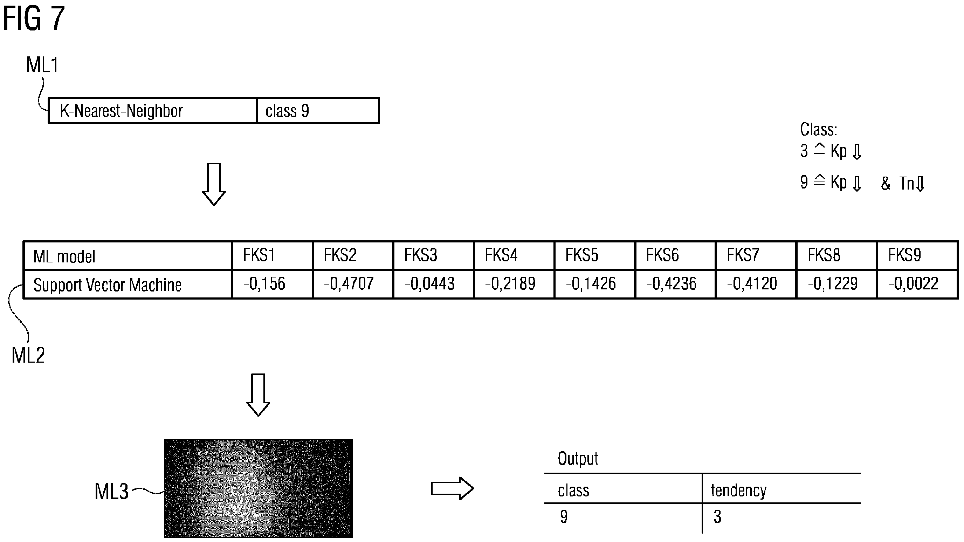

The actual (rotational) speed nᵢₛₜ should be controlled to yield the speed setpoint nₛₒₗₗ. The control loop 10 accuracy may then be determined based on speed setpoint jumps, i.e. on its step response, as shown in Figure 3 and Figure 5. The step response of the speed-controlled system 2 may be traced with a "measuring function", e.g., integrated into a commissioning software application, e.g., STARTER/SCOUT from SIEMENS, as shown in Figure 7. hence, one or more actual values of the drive system may be acquired.

The control loop 10 for controlling the drive system 2 may for example be commissioned or initialized with default-settings. The converter's controller settings (proportional gain factor Kp and integral time Tn) may thus be preset automatically. This may be done by the auto-configuration of SIEMENS' DRIVE-CLiQ or by entering the motor code number into the commissioning tool or the control settings may be manually entered in the converter by a commissioning engineer.

The control loop 10 may be adjusted using one or more control parameters, e.g., Kp and Tn as shown. For example, Kp and/or Tn may be used as control parameters of the PI speed controller 3. By way of the methods and systems proposed herein a recommendation for control action may be obtained in order to adjust the control parameters Kp and/or Tn. Kp of course represents the proportional amplification of the PI speed controller 3, whereas Tn corresponds to the integral time of the PI speed controller 3. Tn is the time which the I-component of the controller would require to produce the same positioning signal that the P-component forms immediately once the control deviation is present. By way of the method proposed a recommendation for control action may be obtained to adjust the control parameter Tn and/or Kp. In the case of a bad encoder signal (noisy actual speed value) the value can be smoothed by a PT1 filter 5. A common smoothing time Tn may be set to about 2-3 ms. As shown in Figure 1, the speed controller may be a PI controller 3.

Turning to Figure 2, exemplary points in time during the lifecycle of a drive system are shown. First, I., a new drive produced or installed. For example, when inserting a new drive to a project, the Kp factor gets pre-assigned depending on the motor inertia and an additional factor of 1/3. During the commissioning of a machine, II., the drive control is optimized by the commissioning personnel. The drive control, mainly the speed controller and, if necessary, smoothing times, is optimized in such a way that the behavior of the drive train, consisting of motor, gearbox, cardan shafts, belts, etc., is optimally matched to each other at this time, III. Due to the ongoing operation of a machine, IV., its mechanics are subject to often not inconsiderable wear, which can change, V., the behavior of the drive train as a whole. Operational environmental influences, such as temperature or oil pressure, can also have an influence that may not have been present during the commissioning phase. However, there is often no re-optimization of the drive train and its control loop, respectively, although its properties have changed significantly due to wear or conversion work. This may result in sub-optimal control and sub-optimal control settings, VI.

So far, the problem is addressed as follows: 1. The plant operator usually did not know that the drive system is no longer optimally controlled according to the desired optimization criteria. The drive system is kept in operation until errors occur and a service technician has to be called. This can lead to a plant shutdown. 2. A service technician regularly checks the behavior of the drive system.

It is proposed to evaluate the control quality of the drive system in relation to the optimization criterion "Symmetric Optimum", SO, and provide a recommendation for one or more actions to set the control parameters. For this purpose, a speed setpoint jump may be switched and passed on to the drive system. The control loop parameters speed setpoint, speed control value, torque output and control difference may then be read out. Figure 3 shows a speed setpoint jump with the corresponding jump responses of the above parameters before optimization of the control loop.

The speed setpoint 11 (pink) has been increased in jumps. At the time of the jump, the control difference 13 (blue) is equal to the jump height, because there was no control difference before the jump. Preferably, there is no setpoint filter in this embodiment that passes the control loop's setpoint, e.g., through a first-order lag filter, before the controller receives the signal. The torque 14 of the drive (black) follows the control difference 13 with a time delay, which occurs due to smoothing times. The unsmoothed speed value 12 (orange) is adjusted to the target speed setpoint 11. Often drive systems are only rarely or not maintained at all and the control is not optimized for changes. As a result, the system is no longer controlled according to the previously defined optimization criterion.

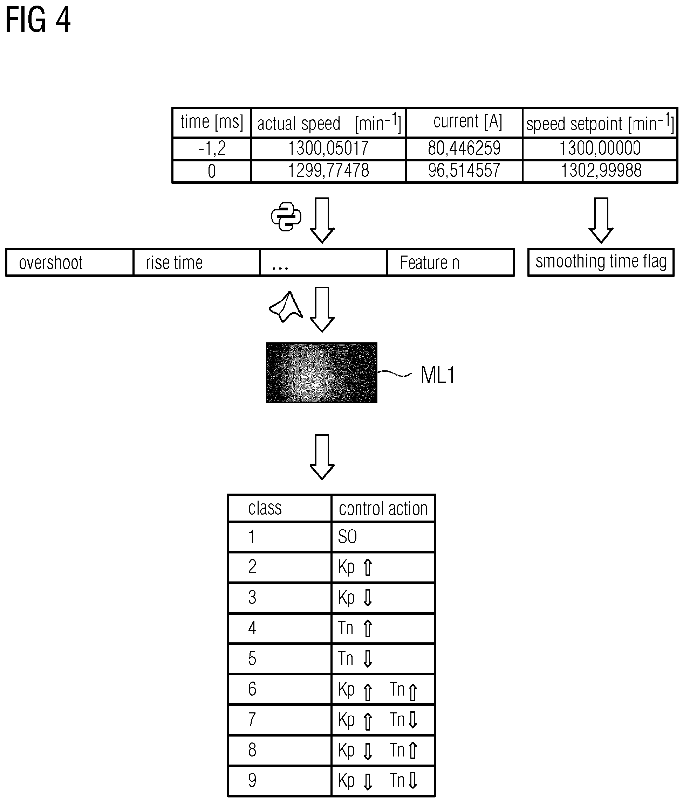

In the following an optimization of a control loop will be described in connection with Figure 4. The result of the optimization is illustrated in Figure 5 which shows two jump responses of a system's control difference: Once, before it has been optimized, 21 (red), with the developed method according to a first and or second procedure, and, once, after optimization, 22 (blue).

As can be seen in Figure 4 the starting point of the optimization may be raw data as sampled or measured or otherwise acquired from the drive system and/or the converter. The raw data of the measurements may be available in certain data format, such as the CSV format. Each measurement may comprise one or more of the following control parameters - as shown in Figure 4:
- (actual (rotation)) speed value, for example in rotations per minute
- (actual) torque value, for example in Newton-meter
- speed setpoint for example in rotations per minute
- control difference, for example in rotations per minute

Furthermore, actual current values feeding the drive may be acquired - as shown in Figure 4.

Based on one or more of these actual values feature extraction may be performed. To that end, a script, e.g., a Python script, may be used, to read the raw data and generate the (characteristic) features. The features may all or at least in part refer to the control difference of the control loop. For example, the features may comprise one or more of the following:
- ü: overshoot of the control difference
- Trise: rise time, which may be defined as Trise=T90-T10 (Anstiegszeit)
- Tmax: time of maximum overshoot
- T50: time until the control difference has been adjusted by half
- Taus: settling time, wherein Taus is the time until the control difference was fixed by 97% or 100% or another percentage depending on the tolerance chosen (Ausregelzeit).

Additional features (based on the control difference) may comprise:
- T90: time until the control difference has been adjusted by 90%
- T10: time until the control difference has been adjusted by 10%
- ΔT: wherein ΔT may be defined as ΔT=Tmax-Tan, wherein Tan is the control rise time that corresponds to T97-T0 (Anregelzeit).

Of course, further features may be formed from the actual values. If the actual values are used for training, i.e. training data, a label (also later referred to as class) may be assigned to the one or more features as will be described further below. If the actual values are used for inference (of an adjustment for optimization of the control loop), a label (also referred to as class) will be inferred by one or more machine learning models based on the feature(s) (values) input.

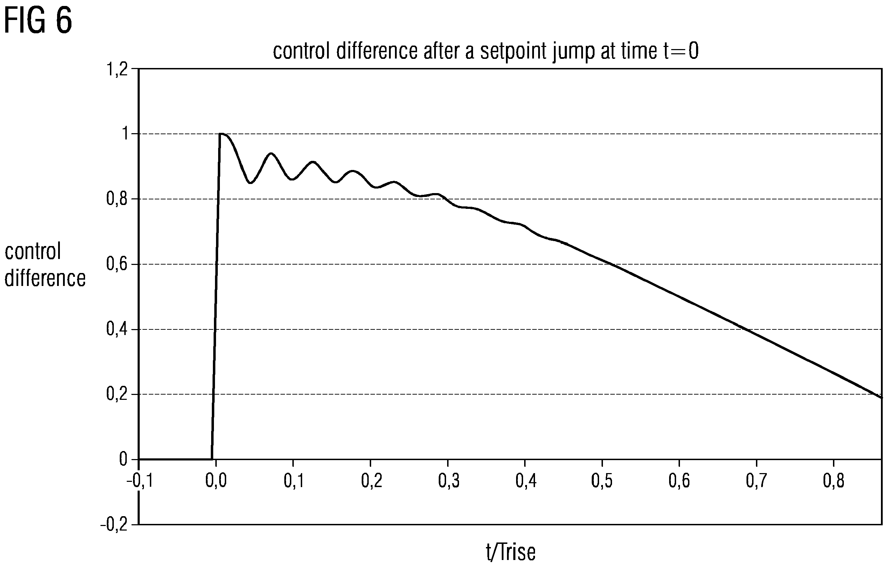

In addition, it may be checked whether the smoothing time is too small for the respective measurement. For this purpose, as shown in Figure 6, the control difference is considered during a time period, e.g., until the rise time T50 or the settling time Taus, is reached. If the control difference during that time period has a higher frequency oscillation, which raises the control difference, e.g., at least once or twice (or another specified number of times) by at least 2% or 5% (or another specified percentage) of the jump height, the smoothing of the actual value of the speed or rotational speed may need to be increased.

Thus, in addition to feature extraction, it is checked during data preprocessing of the actual values whether the time constant of the smoothing time of the actual speed is too small for the respective measurement. For this purpose, the control difference may be considered, e.g., up to the time T50 as mentioned in the above. For the increase in the (actual speed value) smoothing, there are two conditions, one of which must be met. First, if the control difference has at least two higher frequency oscillations, one of which raises the value of the control difference by at least 9% of the jump height in the short term, it is recommended to increase the smoothing time. Second, the speed stability should be increased if at least five higher frequency oscillations occur during the period under consideration, at least two of which increase the control difference by more than 5% of the jump height. In Figure 6 such a higher-frequency oscillation of the control difference is shown as a function of time t in units of Tan.

Returning to Figure 4, the extracted features may be used as input for the machine learning model ML1, or as will be described later for the machine learning model ML2. As shown in Figure 4 a flag indicating whether the smoothing of the actual value of the (rotational) speed should be increased, as described in the above, may be determined as well, e.g. as a result of the Python script.

Furthermore, the extracted features may be normalized. The normalization of the features derived from the actual values and a first optimization procedure will be described in the following. For example, the features are fed into Matlab. Then, the required features may be selected and normalized. For the normalization of time, the time T50 may be used. The normalized features may comprise one or more of the following:
- overshoot of the control difference
- rise time Trise of the control difference normalized to T50
- time difference ΔT normalized to T50
- settling time Taus normalized to T50.

Hence normalization may be performed referring to T50. Furthermore, the features may also be scaled using the mean and the standard deviation of the respective feature.

With the resulting features, all of which may refer to the control difference, a machine learning model ML1 may then be trained. Later on, the trained machine learning model may be used for inference based on the features input. The machine learning model may be an artificial neural network, a K-Nearest-Neighbor model, Support Vector Machine, or Decision Tree, such as a Random Forrest. Preferably a K-Nearest-Neighbor model is used.

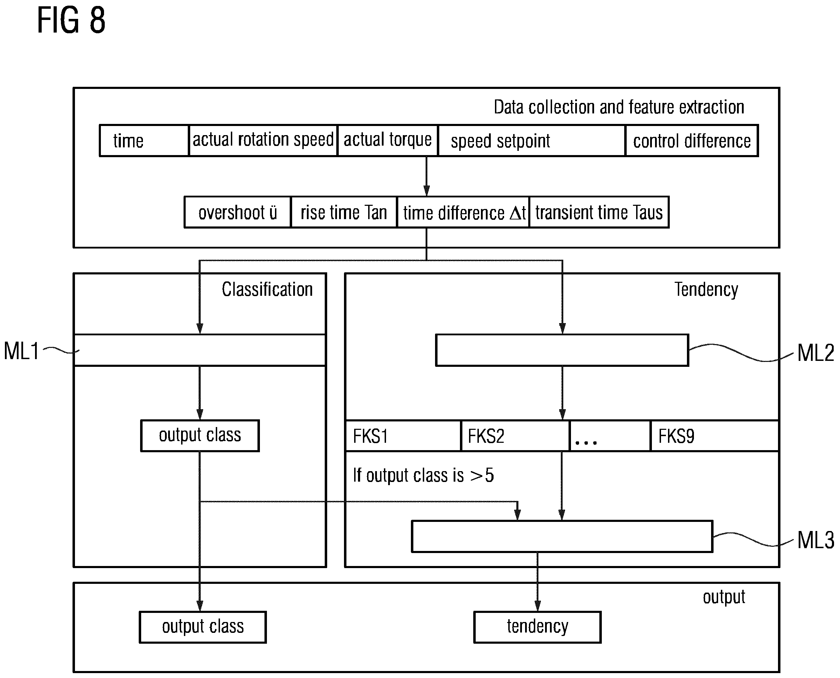

The machine learning model ML1 may classify the features input into a plurality of output classes. In Figure 4, nine output classes are shown. In addition, as shown in the embodiments in Figure 7 and 8, the (same) features may be input into a second machine learning model, preferably a support vector machine, e.g., with the coding "OneVsOne", as will also be scribed later.

As shown in Figure 4, the machine learning model ML1 classifies the input into nine different classes. Of course, another classification schema may be chosen, i.e. classification may be performed into a different number of classes. The classes may have the following adjustment and in particular control action associated with it:
- class 1:: no adjustment necessary, e.g., because the symmetric optimum, SO, is already present
- class 2:: increase Kp (by doubling)
- class 3:: decrease Kp (by half)
- class 4:: increase Tn (by doubling)
- class 5:: decrease Tn (by half)
- class 6:: increase Kp and Tn (by doubling)
- class 7:: increase Kp (by doubling) and decrease Tn (by half)
- class 8:: decrease Kp (by half) and increase Tn (by doubling)
- class 9:: decrease Kp and Tn(by half)

Instead of doubling or halving the respective control parameters, other adjustment factors for adjusting the control parameters may be chosen. However, it has been found that the control loop remains stable under halving or doubling the current control parameter values.

As output data, the machine learning model ML1 may also provide a measure, e.g. a probability, for each class. Additionally or alternatively to the first machine learning model ML1, a second machine learning model, such as a support vector machine, may be used in order to classify the input features according to the classification schema. The support vector machine may provide an error correction sum FKS1,...,FKS9 for each class as output. The smaller the absolute value of the error correction sum FKS1,...,FKS9 the higher the measure, or probability, that the measurement belongs to the respective class.

If the machine learning model ML1 provides classes 1 to 5 as a result, the result may be used (directly) for an adjustment of the control loop. Of course, if the machine learning model provides any one of the classes 6 to 9, i.e. where both, Kp and Tn, may need to be adjusted, as a result, this may be used for adjusting the control loop settings accordingly.

The result of an optimization is shown in Figure 5, where the control difference before and after optimization is shown. As can be seen from Figure 5, the control difference after optimization 22 levels much sooner than control difference before optimization 21. Hence, after optimization, the drive system is adjusted faster and thereby the control accuracy is improved.

Now turning to Figure 7, in case the machine learning model ML1 provides one of the classes 6 to 9 as a result, both Kp and Tn may need to be adjusted. Hence, in general, the case may arise where both, Kp and Tn, may need to be adjusted. In order to find out which parameter, Kp or Tn, dominates a second procedure is proposed. The second procedure being applied after the first procedure - as described in connection with Figure 4. In case of the second procedure, a second machine learning model ML2 is used to classify the input features. For example, a support vector machine may be fed with the features determined and the results, i.e. error correction sums FKS1,..., FKS9 of the support vector machine may be used. The results of the first and second machine learning model ML1, ML2 may then be compared in order to adjust the control parameters of the control loop and/or in order to improve accuracy of the control loop. As can be seen in Figure 6 the results of the two machine learning models ML1, ML2 may be further evaluated by comparing the classification and the respective output values. Hence, for the second procedure the result of two different machine learning models ML1, Ml2 are compared. Here the difference between the models is not with respect to the specific parameterization but with respect to the type of machine learning models ML1, ML2.

The input features for the subsequent evaluation by a decision algorithm, which itself may be a machine learning model ML3, are the results of the second machine learning model ML2, e.g., the (nine) error correction sums FKS1,..., FKS9 from the result of the support vector machine, as well as the result, e.g., the classification, of the first machine learning model ML1. In the present case this results in a total number of ten features that may be used by the third machine learning model ML3. The outcome of the second procedure, which is performed by decision algorithm, consists of three classes 1, 2, 3 as shown in the following:

| 1 | 2 | 3 |
|---|---|---|
| no domination | *Kₚ* dominates | *Tₙ* dominates |

For exemplary reasons, the first and second procedure have been described in connection with a K-Nearest-Neighbor and a support vector machine. However, for performing the first and/or second procedure either an artificial neural network, a Decision Tree model, such as a Random Forrest model or another machine learning model may be used.

Using the result from the first machine learning model ML1 and the result from the second machine learning model ML2 a recommendation for an adjustment, in particular, a control action, can now also be provided if two or more control parameters need to be adjusted. The following table shows the recommendations for a control action according to all of the possible combinations.

| First procedure | Second procedure | adjustment factor (control action) for *Kₚ* | adjustment factor (control action) for *Tn* |
|---|---|---|---|
| 1 | 1-1 | 1 | 1 |
| 2 | - | 2 | 1 |
| 3 | - | 0,5 | 1 |
| 4 | - | 1 | 2 |
| 5 | - | 1 | 0,5 |
| 6 | 1 | 2 | 2 |
| 6 | 2 | 2 | 1,5 |
| 6 | 3 | 1,5 | 2 |
| 7 | 1 | 2 | 0,5 |
| 7 | 2 | 2 | 0,67 |
| 7 | 3 | 1,5 | 0,5 |
| 8 | 1 | 0,5 | 2 |
| 8 | 2 | 0,5 | 1,5 |
| 8 | 3 | 0,67 | 2 |
| 9 | 1 | 0,5 | 0,5 |
| 9 | 2 | 0,5 | 0,67 |
| 9 | 3 | 0,67 | 0,5 |

The adjustment may be applied to the control loop, e.g., either automatically or may displayed to a user in order to manually enter the one or more adjustments, e.g., via a commissioning tool. Again, different adjustment factor may be chosen, but it is important that the direction of change is adhered.

Returning to the embodiment of Figure 7, the result of the second procedure is that although both Kp and Tn should be raised, it is Kp that influences the behavior of the control loop more, i.e. dominates. In that case the adjustment and/or control action recommendation may be changed to increase (only) Kp according to the adjustment factor as shown in the table above.

The whole procedure, comprising the first and second procedure as the case may be, may be repeated until the first machine learning model outputs the class 1, i.e. the symmetrical optimum is reached. Of course, the first procedure may be adjusted to identify the absolute value optimum or another desired optimization goal. During the (repeated) optimization, the control action recommendation may change from a recommendation to increase a control parameter to a recommendation to decrease a control parameter. If this is the case, the factors presented in the table above may no longer be used. From this point on, the control parameter may be adjusted so that it is set in the middle between the (too high) adjustment factors and the (too small) adjustment factor of the respective control parameter. Furthermore, care must always be taken to whether the "smoothing of the actual value of the speed " flag is set. If this is the case, the smoothing of the actual value of the speed should be increased and the parameters Kp and Tn should not be changed.

Turning to Figure 8 another embodiment is shown. As can be seen, first, data acquisition is performed. That is to say, measurement data representing the actual speed, actual torque, speed setpoint and control difference is obtained. The respective data points may be time stamped. Based on the data acquired feature extraction may be performed. The features may comprise overshoot ü, rise time Trise, time difference ΔT, and settling time Taus.

Based on the features in a first procedure a classification using a first machine learning model ML1 is determined. The first machine learning model outputs a single class. The different classes may correspond to the different adjustments and/or control action recommendations. In case the first machine learning model determines that only a single parameter need to be adjusted the output class (and corresponding) control action may be used or realized directly. In case output class of the first machine learning model corresponds to an adjustment or control action recommendation of two or more control parameters the output or results of the second machine learning model are determined in a second procedure. In that case either the inference by the second machine learning model is started after the inference of the first machine model is obtained or the inference of the second machine learning model is performed in parallel to the inference of the first machine learning model. In any case, the output or results of the first and second machine learning model are used to determine a tendency which of the two or more control parameters of the control loop dominates and should solitarily be adjusted. To that end a third machine learning model may be fed with at least part of the output or results of the first and second machine learning model. The third machine learning model may then infer the tendency. The result of the third machine learning model may then be used to adjust the control loop of the drive system. As described earlier, the third machine learning model ML may be any one of a K-Nearest-Neighbor, a support vector machine, an artificial neural network or a decision tree.

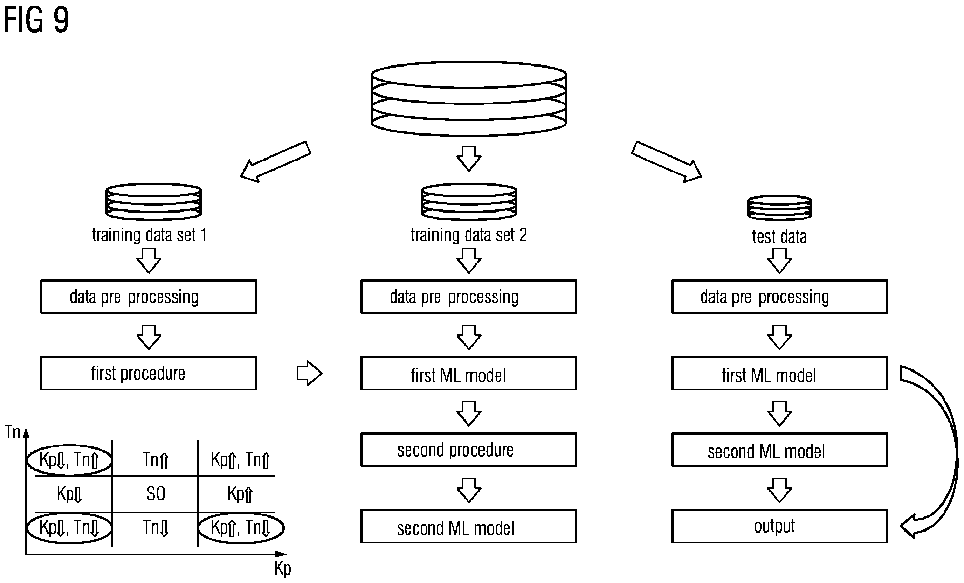

With regard to Figure 9 training and creation of a first and a second machine learning model will be explained. A data set may be divided into sub-sets such as a first training data set, a second training data set and a test data set. The data set may comprise raw data corresponding to the actual values of the drive system. This data set is thus in this case divided in three data sub-sets of different or same sizes. All three, sub-sets may be subject to some preprocessing in order to generate features for the respective machine learning model.

In the case of the first sub-set, this first sub-set may be used to train the first machine learning model. The first machine learning model thus servs to identify the adjustment or control action control according to the first procedure. Therein, first procedure serves for identifying which control parameters of the control loop needs to be adjusted in order to optimize the control loop according to an optimization criterium, such as the symmetrical optimum. As a result of this training a first machine learning model is obtained. This first machine learning model may then be used by itself or in combination with the second procedure as described in the following.

In case of the second sub-set, the second sub-set may be input into the first machine learning model in order obtain training data for the second procedure, the second procedure comprising a second machine learning model to be trained. As a result, a second machine learning model trained on the results of the first machine learning model (and the features input into the first machine learning model) is obtained. Therein, (only) the results of the first machine learning model describing an adjustment of more than one, i.e. of two or more, of the control parameters of the control loop may be used to train the second machine learning model.

In case of the third sub-set, the third sub-set may be used for testing the first and/or second machine learning model obtained by the training as described in the above. Of course, the data set may only be divided in one or two sub-sets, i.e. for training the first and second machine learning model.

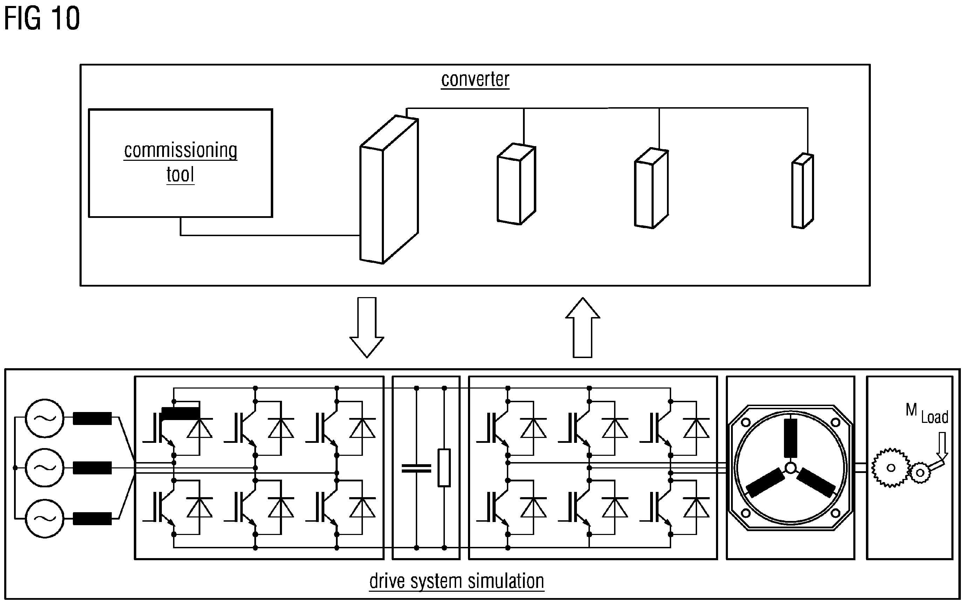

With regard to Figure 10 generation of the data set as shown in Figure 9 will be described in more detail. In case insufficient data about a drive system and its different application is available, to supplement the existing data or otherwise, a drive system simulation may be used to obtain the data required for training and/or testing purposes. On the other hand, a real converter hardware for controlling the simulated drive system may be used. Such as setup is generally known by the term Hardware in the Loop, HiL. The converter may comprise one or more components, i.e. may have a modular architecture. In addition, the converter may comprise or may be operatively coupled to sensors for acquiring the measured data. However, in the present case a drive system simulation may be used that provides input or output signals or data that replaces the real-world data or signals. As shown in Figure 10, a software application or tool may be used to commission and/or optimize the control loop settings of the converter. To that end, software application is operative to perform one or more of the method steps as described in the above. That is to say, the software application may be operative to acquire the actual values of the drive system. Furthermore, the software application may comprise the one or more machine learning models for inferring one or more adjustments of control parameters of the control loop for improving the control accuracy and for outputting the adjustments for adapting the control parameter values. Furthermore, the software application may be operative to set the control loop parameters according to the adjustment(s) determined.

By way of the methods and systems proposed herein, the control quality of the drive system can be analyzed online and during operation. By triggering a speed setpoint jump, the plant operator may receive a recommendation for one or more control actions in order to adjust the control parameters of the drive system. The plant operator can test the control quality of his drive system himself and thus has the assurance that the control parameters are optimally adjusted to the application.

## Claims

1. Method of optimizing a control loop (10) of a converter (1), e.g., a control system (20) of a converter (1), comprising the steps of:
acquiring actual values (nᵢₛₜ) of a drive system (2) powered by the converter (1),
inferring, based on at least one machine learning model (ML1, ML2, ML3) and the actual values (nᵢₛₜ), one or more adjustments of control parameters (Kp, Tn) of the control loop (10) for improving the control accuracy,
outputting the adjustments for adapting the control parameter (Kp, Tn) values.

2. Method according to the preceding claim, wherein the step of inferring comprises determining one or more control actions for adjusting one or more of the control parameters (Kp, Tn).

3. Method according to any one of the preceding claims, wherein the step of inferring comprises determining a control action from a limited number of control actions, wherein the control action comprises adjusting a coefficient of the proportional part of the control loop, Kp, or an integral time of the integral part of the control loop, Tn, or a combination of both.

4. Method according to any one of the preceding claims, wherein the control action comprises adjusting an adjustment factor of the respective control parameter value.

5. Method according to any one of the preceding claims, wherein the machine learning model (ML1, ML2, ML3) is a combination of multiple different machine learning models, preferably one or more K-Nearest-Neighbor and/or one or more support vector machines or a combination of both.

6. Method according to any one of the preceding claims, wherein a first machine learning model (ML1), preferably a K-Nearest-Neighbor model, outputs a classification, e.g., for each of the plurality of control actions, and a second machine learning model (ML2), preferably a support vector machine, (ML2) outputs an error-sum, e.g., for each of the plurality of control actions.

7. Method according to any one of the preceding claims, wherein at first the control action is determined based on the first machine learning model (ML1), and in case the determined adjustment, e.g., the control action, is combination of adjusting two or more control parameters, the specific combination of adjustments, e.g., control actions, is determined based on the second machine learning model (ML2).

8. Method according to any one of the preceding claims, repeating the method steps of any one of the preceding claims until a symmetrical optimum, SO, or the Absolute Value Optimum, AVO, is obtained.

9. A converter (1) operative to perform the method steps according to any one of the preceding claims.

10. A method of training a machine learning model (ML1, ML2, ML3), comprising the steps of training the machine learning model (ML1, ML2, ML3) based on actual values of a (virtual) drive system (2), the actual values comprising actual rotation speed, rotation speed setpoint, actual torque, control difference.

11. A method of training a machine learning model (ML1, ML2, ML3) according to the preceding claim, comprising: deriving one or more features from the actual values (nᵢₛₜ) for inputting the features into the machine learning model (ML1, ML2, ML3), the features comprising one or more of: relative overshooting of the control difference, rising time of the control difference, moment of the maximal overshooting, time until half of the control difference is achieved, total control time for achieving the control difference.

12. The method of training a machine learning model according to the preceding claim, comprising the step of assigning one or more labels to the features generated, wherein the labels correspond to one or more control actions for adjusting the control loop (10) settings.

13. The method of training a machine learning model (ML1, ML2, ML3) according to claims 10 to 12, wherein the machine learning model comprises a K-Nearest neighbor model (ML1) and/or a support vector machine (ML2).
